# EUROPÄISCHE PATENTSCHRIFT

(11) **EP 2 740 928 B1**
(45) Veröffentlichungstag und Bekanntmachung des Hinweises auf die Patenterteilung: **10.01.2018**
(21) Anmeldenummer: 12008160.9
(22) Anmeldetag: 06.12.2012
(51) Int. Cl.: F03D 80/00

(54) **Windenergieanlage**
Wind energy system
Eolienne

(43) Veröffentlichungstag der Anmeldung: 11.06.2014
(73) Patentinhaber: Nordex Energy GmbH, 22419 Hamburg (DE)
(72) Erfinder: Ortelt, Andreas, 18057 Rostock (DE); Muhamad, Ibrahim, 18057 Rostock (DE); Wackrow, Torsten, 18055 Rostock (DE); Gutzmer, Robert, 18059 Rostock (DE)
(74) Vertreter: Hauck Patentanwaltspartnerschaft mbB

(56) Entgegenhaltungen:
- WO-A1-2012/122989
- WO-A2-2011/117005
- DE-A1-102010 043 436

## Beschreibung

Die vorliegende Erfindung betrifft eine Windenergieanlage mit einem Maschinenträger, der auf einem Turm gelagert ist und auf dem eine Rotorwelle gelagert ist, die ein über eine Rotornabe aufgenommenes Drehmoment an eine Eingangswelle eines Generators weiterleitet.

Aus EP 1 251 306 A2 ist ein zweiteiliger Maschinenträger für eine Windenergieanlage bekannt geworden. Auf einem ersten Teil des Maschinenträgers, der auf dem Turm gelagert ist, ist eine Aufnahme für das Rotorlager vorgesehen. Der zweite Teil des Maschinenträgers wird von einem leeseitigen horizontalen Generatorträger zur Aufnahme des Generators gebildet.

Aus US 2011/0278852 A1 ist ein zweiteiliger Maschinenträger bekannt geworden. Zur Aufnahme des Generators ist leeseitig eine Rahmenstruktur aus Druck- und Zugstäben vorgesehen.

Aus WO 2010/091654 A2 ist ein einteiliger Maschinenträger bekannt geworden, der luvseitig einen geschlossenen Bereich zur Aufnahme eines Generatorstators aufweist.

Aus EP 2 014 917 A1 ist ein zweiteiliger Maschinenträger mit luv- und leeseitiger Aufnahme für jeweils ein Lager der Antriebswelle bekannt geworden. Leeseitig ist an dem Maschinenträger eine Generatorträgerbefestigung für einen Generatorstator angeflanscht.

Aus EP 1 999 839 A1 ist ein einteiliger Maschinenträger mit luv- und leeseitiger Aufnahme für das Lager der Antriebswelle bekannt geworden. Der Generatorstator stützt sich über einen Generatorträger am Maschinenträger ab.

Aus US 7,547,985 B1 ist ein Maschinenträger mit einer luvseitigen und leeseitigen Aufnahme für die Lager der Antriebswelle bekannt geworden. Der Generatorstator stützt sich über einen Flansch an dem Maschinenträger ab. Der Maschinenträger ist über einen weiteren Träger mit einer Azimutdrehverbindung des Turms verbunden.

Aus WO 2009/056664 A1 ist ein Maschinenträger mit einer luv- und leeseitigen Aufnahme für die Lager der Antriebswelle bekannt geworden. Der Generatorstator stützt sich über einen Flansch am Maschinenträger ab.

Aus WO 01/94779 A1 ist ein dreiteiliger Maschinenträger mit luv- und leeseitigen Teilen zur Aufnahme der Lager für die Antriebswellen bekannt geworden. In einem Mittelteil ist der Maschinenträger mit der Azimutdrehverbindung des Turms verbunden.

Aus ES 2 277 795 A1 ist ein Maschinenträger mit luv- und leeseitiger Aufnahme der Wellenlager bekannt geworden. Der Generatorstator stützt sich über einen Flansch am Maschinenträger ab.

Aus WO 2011/117005 A2 ist eine Windenergieanlage mit einer Gondel bekannt, an die Seitenteiledie angesetzt werden können, die über verschließbare Türen zugänglich sind.

Aus DE 10 2010 043 436 A1 ist eine Vorrichtung zur Steuerung der Verriegelung einer Öffnung einer Tür bekannt geworden, bei der Mittel zur Fixierung bzw. zur Arretierung eines drehenden Teils vorgesehen sind und die Tür zwischen dem drehenden und dem stehenden Teil der Windenergieanlage eine Verriegelung aufweist.

Der Erfindung liegt die Aufgabe zugrunde, eine Windenergieanlage zur Verfügung zu stellen, deren Maschinenträger die Rotorwelle lagert und bei Wartungsarbeiten eine sicheres Arbeiten im Bereich des Maschinenträgers an der Rotorwelle, Lagern und dergleichen erlaubt.

Die Aufgabe wird durch eine Windenergieanlage mit den Merkmalen aus Anspruch 1 gelöst. Bevorzugte Ausgestaltungen sind in den Unteransprüchen dargestellt.

Erfindungsgemäß besitzt die Windenergieanlage einen Maschinenträger, der auf einem Turm gelagert und auf dem eine Rotornabe und Generator verbindende Rotorwelle gelagert ist. Der erfindungsgemäße Maschinenträger ist dadurch gekennzeichnet, dass ein von dem Turm aus zugänglicher Zugangsbereich vorgesehen ist, der von einem Arbeitsbereich des Maschinenträgers durch eine Abtrennung getrennt und mit dem Arbeitsbereich über eine verriegelbare Tür verbunden ist. Der erfindungsgemäße Maschinenträger besitzt mit dem Zugangsbereich und dem Arbeitsbereich zwei voneinander getrennte Bereiche. Die die beiden Bereiche voneinander trennende Abtrennung umgibt den Zugangsbereich. Sie kann aus einem Vollmaterial, z.B. aus Metall- oder GFK-Platten oder aus Wandelementen mit oder ohne eine gitterartige Struktur bestehen. Der Übertritt von dem Zugangsbereich in den Arbeitsbereich erfolgt über die verriegelbare Tür.

Erfindungsgemäß ist in dem Zugangsbereich ein Betätigungsorgan für eine Arretiervorrichtung vorgesehen, die die Rotorwelle in einer Position sichert. Die Arretiervorrichtung wirkt zusätzlich mit der verriegelbaren Tür derart zusammen, dass diese nur bei erfolgter Arretierung der Rotorwelle entriegelbar ist. Das Betätigungsorgan für die Arretiervorrichtung ist in dem Zugangsbereich angeordnet, so dass nach einem Übertritt aus dem Turm in den Zugangsbereich über das Betätigungsorgan die im getrennten Arbeitsbereich des Maschinenträgers verlaufende Rotorwelle arretiert werden kann und nachfolgend ein Übertritt in den Arbeitsbereich durch die entriegelte Tür möglich ist. Bevorzugt entriegelt die Arretiervorrichtung die verriegelbare Tür. Die verriegelbare Tür stellt sicher, dass Wartungsarbeiten in dem Arbeitsbereich des Maschinenträgers nur durchgeführt werden können, wenn die Rotorwelle zuvor durch die Arretiervorrichtung festgesetzt worden ist.

Erfindungsgemäß weist der Maschinenträger eine die Rotorwelle umgebende Wandung mit Durchbrechungen auf. Anders als bei im Stand der Technik bekannten, im Wesentlichen horizontal flach ausgebildeten Maschinenträgern ist der erfindungsgemäße Maschinenträger mit einer Wandung ausgestattet, die die Antriebswelle umgibt. Die Durchbrechungen ermöglichen einen kontrollierten Zugang zu dem Arbeitsbereich für die Rotorwelle und andere Komponenten, wobei die Abtrennung teilweise von der Wandung des Maschinenträgers gebildet sein kann.

In einer bevorzugten Ausgestaltung ist ein innerer Arbeitsbereich des Maschinenträgers innerhalb und ein äußerer Arbeitsbereich außerhalb der Wandung des Maschinenträgers vorgesehen. Der innere Arbeitsbereich ist so gestaltet, dass Arbeiten an allen innerhalb des Maschinenträgers befindlichen Komponenten, wie beispielsweise der Rotorwelle, der Kupplung oder der Sensorik, möglich sind. Der äußere Arbeitsbereich umfasst einen Teil des Bereichs oder den gesamten Bereich zwischen Maschinenträger und Gondelverkleidung und die darin angeordneten Komponenten. Der Maschinenträger ist bevorzugt so geformt, dass er eine Einhausung für die Rotorwelle der Windenergieanlage bildet.

In einer bevorzugten Ausgestaltung ist die verriegelbare Tür des Zugangsbereichs in einer Durchbrechung der Wandung des Maschinenträgers angeordnet. Die Wandung des Maschinenträgers bildet die nach außen zum äußeren Arbeitsbereich weisende Wand des Zugangsbereichs. In der Durchbrechung kann eine Verkleidung angebracht werden, in welche die verriegelbare Tür eingebaut werden kann.

In einer bevorzugten Ausgestaltung erstreckt sich der Zugangsbereich sowohl innerhalb als auch außerhalb des Maschinenträgers. Der gesamte Zugangsbereich ist von einer Abtrennung umgeben, die sich in dieser Ausgestaltung sowohl innerhalb als auch außerhalb des Maschinenträgers befindet. Die verriegelbare Tür des Zugangsbereichs ist dem Bereich der Abtrennung angeordnet, welcher sich außerhalb des Maschinenträgers befindet. Bei dieser Ausgestaltung kann der Zugangsbereich größer dimensioniert werden, da er nicht mehr nur auf den Raum innerhalb des Maschinenträgers beschränkt ist.

In einer bevorzugten Ausgestaltung ist der innere Arbeitsbereich des Maschinenträgers durch eine weitere Durchbrechung zugänglich. Die Durchbrechung kann sich auf der gleichen Seite des Maschinenträgers wie die Tür des Zugangsbereichs befinden. In dieser Ausgestaltung erfolgt aus dem Zugangsbereich heraus der Zugang in den äußeren Arbeitsbereich des Maschinenträgers. Von dem äußeren Arbeitsbereich des Maschinenträgers erfolgt über die weitere Durchbrechung der Zugang in den inneren Arbeitsbereich des Maschinenträgers. Bevorzugt ist die weitere Durchbrechung mit einer weiteren Tür ausgestattet, so dass der Zugang zu dem inneren Arbeitsbereich über die weitere Tür von dem äußeren Arbeitsbereich erfolgt.

Bevorzugt ist ein Paar von Durchbrechungen in der Wandung des Maschinenträgers vorgesehen. Die Durchbrechungen sind auf einander gegenüberliegenden Seiten des Maschinenträgers angeordnet. Hierdurch wird eine symmetrische Ausgestaltung des Maschinenträgers, bezogen auf seine Längsrichtung, erreicht, so dass eine symmetrische Kraftverteilung vorliegt.

In einer möglichen Ausgestaltung kann eine weitere Tür in dem Bereich der Abtrennung des Zugangsbereichs vorgesehen sein, welcher sich innerhalb des Maschinenträgers befindet, so dass aus dem Zugangsbereich heraus der Zugang sowohl zu dem inneren Arbeitsbereich als auch zu dem äußeren Arbeitsbereich erfolgt. Die weitere Tür ist bevorzugt ebenfalls verriegelbar und mit der Arretiervorrichtung für die Rotorwelle gekoppelt, so dass nur bei erfolgter Arretierung der Rotorwelle ein Übertritt aus dem Zugangsbereich in den inneren Arbeitsbereich durch die entriegelte weitere Tür möglich ist.

In einer weiteren bevorzugten Ausgestaltung weist der Maschinenträger in der Wandung weitere Durchbrechungen auf, welche nicht für den Zutritt in den inneren Arbeitsbereich des Maschinenträgers vorgesehen sind. Die weiteren Durchbrechungen sind bevorzugt durch einen Berührschutz verschlossen. Der Berührschutz kann beispielsweise als ein Gitter oder eine transparente Scheibe ausgebildet sein.

In einer bevorzugten Ausgestaltung sind die weiteren Durchbrechungen (60, 62, 64) in der Wandung des Maschinenträgers so angeordnet, dass durch die weiteren Durchbrechungen eine Inspektion und/oder Wartung von Bauteilen im Inneren des Maschinenträgers erfolgen kann. Die Durchbrechungen sind beispielsweise im Bereich der Kupplungen oder im Bereich von Sensoren angeordnet.

In einer bevorzugten Ausgestaltung sind zwei oder mehr weitere Durchbrechungen auf jeder Seite der Wandung des Maschinenträgers vorgesehen. Zwischen zwei benachbarten Durchbrechungen bildet die Wandung jeweils einen Steg aus, über welchen die Zug- und Druckkräfte ausgeleitet werden. Der oder die Stege sind bevorzugt geneigt gegenüber der Rotorwelle angeordnet, um die angreifenden Kräfte besser in den Maschinenträger einzuleiten.

Der Maschinenträger besitzt bevorzugt einen umlaufenden Anschlussbereich an seinem zu einer Rotornabe weisenden Ende, in dem ein rotornabenseitiges Lager der Rotorwelle angeordnet ist und bevorzugt einen umlaufenden Anschlussbereich an einem zum Generator weisenden Ende, an dem ein weiteres Rotorwellenlager, der Generatorstator oder ein Lager des Generators befestigt ist.

Ein Ausführungsbeispiel zu der Erfindung wird nachfolgend näher beschrieben. Es zeigt:
- Fig. 1: eine Ansicht auf den Triebstrang mit Rotornabe und Generator von der Seite,
- Fig. 2: eine Ansicht auf den Triebstrang von oben,
- Fig. 3: eine Ansicht des Einstiegsbereichs in den Turm aus dem Maschinenträger,
- Fig. 4: eine Ansicht des Zugangsbereichs von der Seite,
- Fig. 5: eine Ansicht des Maschinenträgers und seiner Begehfläche von oben in einer ersten Ausgestaltung und
- Fig. 6: eine weitere Ansicht des Maschinenträgers und seiner Begehfläche von oben in einer weiteren Ausgestaltung.

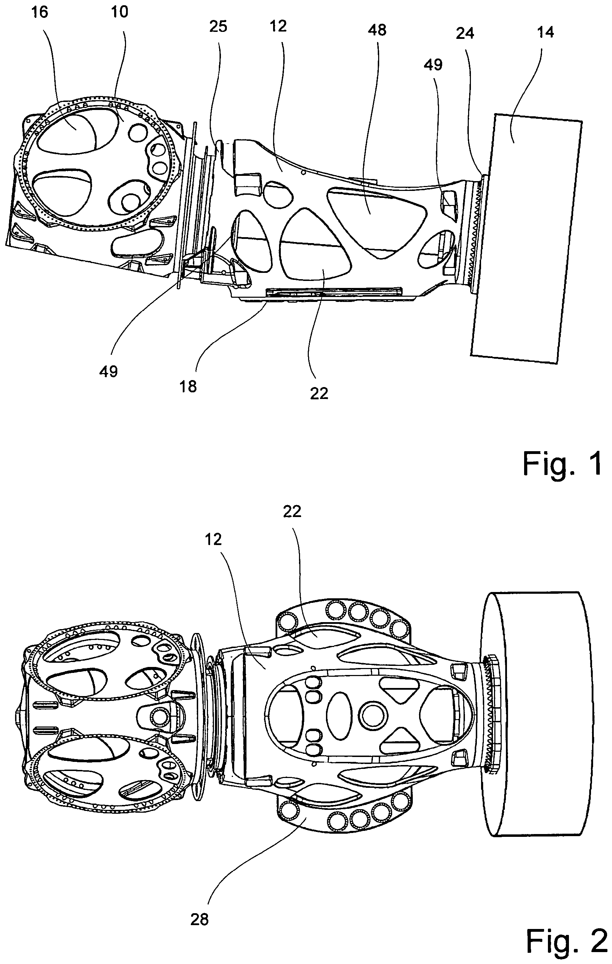

Fig. 1 zeigt in einer Ansicht von der Seite eine Rotornabe 10, einen Maschinenträger 12 und einen Generator 14. Die Rotornabe 10 besteht aus einem Bauteil, das drei kreisförmige Öffnungen 16 für einen Anschluss je eines Rotorblatts besitzt. In der Darstellung aus Fig. 1 sind die nach unten weisende Öffnung 16 und die ungefähr nach 2 Uhr weisende Öffnung 16 zu erkennen. Die in die 10-Uhr-Position weisende Öffnung 16 ist verdeckt. Die Rotornabe 10 trägt die Rotorblätter (nicht dargestellt) und wird von diesen gedreht, wobei das aufgenommene Drehmoment über eine Rotorwelle weitergetragen wird.

Der Maschinenträger 12 besitzt einen Anschlussbereich 18 zur Verbindung mit einer Azimutdrehverbindung, über die der Maschinenträger 12 drehbar auf einem Turm der Windenergieanlage gelagert ist. Um angreifende Kräfte besser aufnehmen zu können, ist der Maschinenträger 12 nicht als eine Plattform ausgebildet, sondern besitzt eine annähernd geschlossene Struktur, in der einzelne Durchbrechungen 22 vorgesehen sind. Durch seine geschlossene Struktur erlaubt der Maschinenträger 12 einen stabilen Anschluss des Generators 14 an einen Flanschbereich 24, der an einem dem Generator zuweisenden Ende des Maschinenträgers vorgesehen ist. Auch an seinem zur Rotornabe weisenden Ende besitzt der Maschinenträger einen umlaufenden, geschlossenen Anschlussbereich 25 zur Aufnahme eines Rotorlagers.

Der Generator 14 befindet sich außerhalb des Maschinenträgers. Der Aufbau des Triebstrangs ist dadurch gekennzeichnet, dass die Rotornabe 10 und der Generator 14 auf gegenüberliegenden Seiten des Maschinenträgers 12 angeordnet sind. Die Rotornabe 10 und der Generator 14 sind durch eine im Inneren des Maschinenträgers 12 verlaufende Rotorwelle 48 und zwei Kupplungen 49 miteinander verbunden.

Fig. 2 zeigt die Darstellung aus Fig. 1 in einer Ansicht von oben. Deutlich zu erkennen ist, dass der Maschinenträger 12 am Anschlußbereich 18 seitlich vorstehende Flansche 28 zur Aufnahme der Azimutantriebe besitzt. Der Maschinenträger ist über den Anschlußbereich 18 auf dem Turm und/oder einer Azimutdrehverbindung des Turms gelagert. Der Anschlußbereich mit den vorstehenden Flanschen kann eine Begehfläche in einem äußeren Arbeitsbereich abstützen. Auch sind die Durchbrechungen 22 in dem Maschinenträger 12 zu erkennen. Die Durchbrechungen 22 geben den Zugang zu dem Inneren des Maschinenträgers frei, ohne seine Steifigkeit zu schwächen.

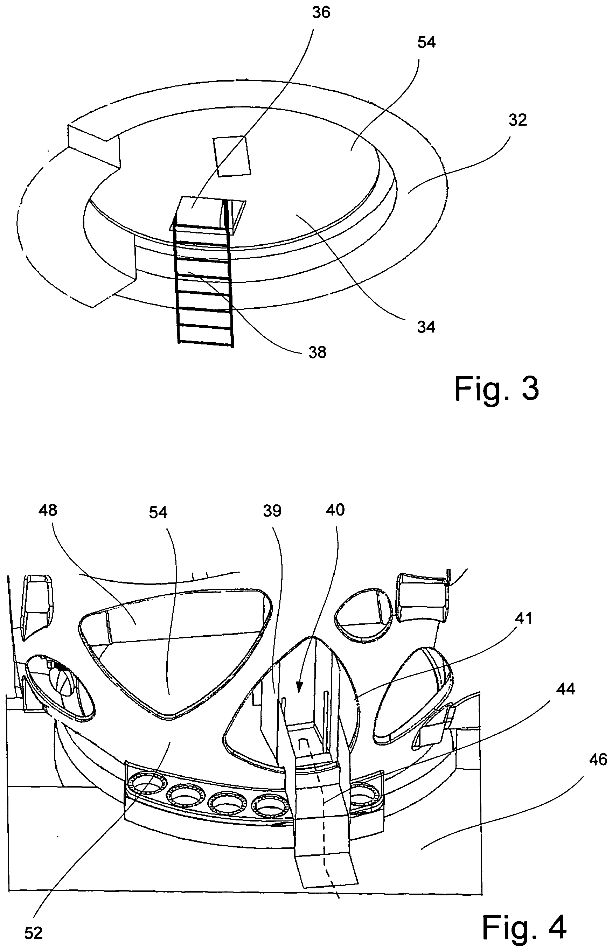

Fig. 3 zeigt eine perspektivische Ansicht aus dem Inneren des Turms 30 heraus auf eine Azimutdrehverbindung 32 (schematisch dargestellt). Auf der zum Maschinenträger weisenden Seite der Azimutdrehverbindung ist ein innerer Arbeitsbereich 54 mit einer Begehfläche in Form eines Bodenblechs 34 vorgesehen, in dem eine Einstiegsluke 36 zu erkennen ist. Durch die Einstiegsluke 36 führt aus dem Inneren des Turms heraus eine Leiter 38, von der aus ein Überstieg in den Maschinenträger möglich ist. Die Luke 36 führt in einen Zugangsbereich des Maschinenträgers.

Fig. 4 zeigt in einer perspektivischen Ansicht den Zugangsbereich 40 des Maschinenträgers. Die den Zugangsbereich 40 begrenzenden Wände der Abtrennung sind schematisch dargestellt. Der Zugangsbereich 40 ist an drei Seiten von Wänden umgeben, die den Zugangsbereich vom inneren Arbeitsbereich 54 im Maschinenträger abgrenzen und die Abtrennung 39 des Zugangsbereichs bilden. An der vierten Seite des Zugangsbereichs befindet sich eine Durchbrechung 41 der Wandung 52 des Maschinenträgers 12. Der Weg 44 führt aus dem Zugangsbereich 40 im Maschinenträger hinaus auf die Begehfläche eines äußeren Arbeitsbereichs 46. Entlang dem Weg 44 ist eine verriegelbare Tür (nicht dargestellt) in der Wandung 52 des Maschinenträgers vorgesehen, die nur geöffnet werden kann, wenn der Rotor und die Rotorwelle 48 zuvor arretiert worden sind. Hierzu ist in dem Zugangsbereich 40 ein Betätigungsorgan vorgesehen, dass eine automatische Arretierung der Rotorwelle 48 auslöst.

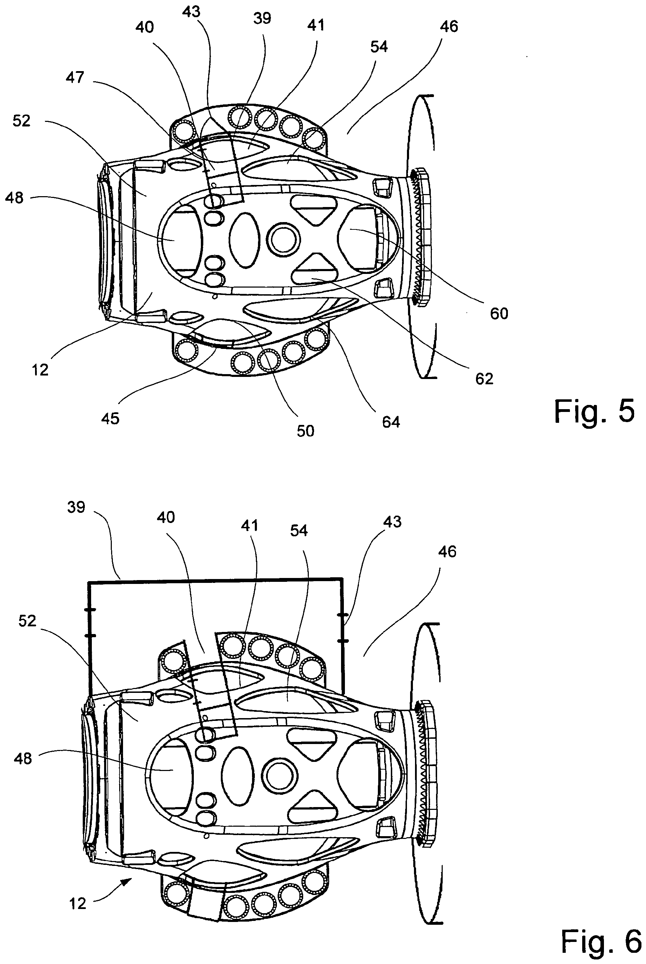

Fig. 5 zeigt in einer schematischen Ansicht von oben den Zugangsbereich 40 sowie die im und um den Maschinenträger 12 herum vorgesehenen Arbeitsbereiche 54, 46.

Der Zugangsbereich 40 ist an drei Seiten von einer Wandung 39 umgeben, die den Zugangsbereich vom Inneren des Maschinenträgers abgrenzt. In der Wandung 52 des Maschinenträgers 12 befindet sich eine Durchbrechung 41. Die Durchbrechung 41 weist eine Verkleidung auf, an welche die Wandung 39 des Zugangsbereichs 40 anschließt. An der nach außen weisenden vierten Seite des Zugangsbereichs befindet sich eine Tür 43. Die Tür ist verriegelbar und kann nur geöffnet werden, wenn der Rotor und die Welle 48 zuvor über ein im Zugangsbereich 40 angeordnetes Betätigungsorgan arretiert worden sind.

Vom inneren Arbeitsbereich 54 aus können Arbeiten an Komponenten, die sich innerhalb des Maschinenträgers befinden, durchgeführt werden. Vom äußeren Arbeitsbereich 46 aus können Arbeiten an Komponenten, die sich außerhalb des Maschinenträgers befinden, durchgeführt werden.

Der Zugang zum inneren Arbeitsbereich im Maschinenträger erfolgt über eine Durchbrechung 50 in der Wandung 52 des Maschinenträgers. Die Durchbrechung 50 befindet sich auf der der Durchbrechung 41 gegenüberliegenden Seite des Maschinenträgers. Durch die Durchbrechung 50 hindurch ist der innere Arbeitsbereich 54 im Inneren des Maschinenträgers zugänglich. Die Durchbrechung 50 ist ebenfalls mit einer verriegelbaren Tür 45 versehen. Diese Sicherheitsmaßnahme ist beispielsweise erforderlich, wenn die Windenergieanlage über einen Zugang über eine Helikopter-Plattform verfügt.

Ein weiterer Zugang zum inneren Arbeitsbereich 54 befindet sich in der Wandung 39, welche den Zugangsbereich 40 vom inneren Arbeitsbereich abgrenzt. Auch dieser Zugang ist mit einer verriegelbaren Tür 47 versehen, die nur bei arretiertem Rotor geöffnet werden kann.

Die Wandung 52 des Maschinenträgers weist weitere Durchbrechungen (60, 62, 64) auf. Diese Durchbrechungen weisen jeweils eine ungefähr dreieckige Form mit stark abgerundeten Ecken auf. Sie sind so angeordnet, dass sie den Blick auf die im Inneren des Maschinenträgers befindlichen Teile des Triebstrangs, wie beispielsweise die Kupplung freigeben. Aus Sicherheitsgründen sind die Öffnungen mit transparenten Scheiben als Berührschutz abgedeckt.

Fig. 6 zeigt in einer schematischen Ansicht eine weitere Ausgestaltung des Maschinenträgers. Fig. 6 zeigt von oben den Zugangsbereich 40 sowie die im und um den Maschinenträger 12 herum vorgesehenen Arbeitsbereiche 54, 46. Im Unterschied zu der Ausgestaltung nach Fig. 5 erstreckt sich der Zugangsbereich 40 sowohl innerhalb als auch außerhalb des Maschinenträgers. Der Zugangsbereich ist sowohl innerhalb als auch außerhalb des Maschinenträgers von einer Wandung 39 umgeben, die den Zugangsbereich von den Arbeitsbereichen innerhalb und außerhalb des Maschinenträgers abgrenzt. Eine Durchbrechung 41 der Wandung 52 des Maschinenträgers 12 erlaubt den Durchtritt vom Zugangsbereich innerhalb des Maschinenträgers in den Zugangsbereich außerhalb des Maschinenträgers und umgekehrt. In der Wandung, welche den Zugangsbereich außerhalb des Maschinenträgers umgibt, ist eine Tür 43 vorgesehen. Die Tür ist verriegelbar und kann nur geöffnet werden, wenn der Rotor und die Welle 48 zuvor über ein im Zugangsbereich 40 angeordnetes Betätigungsorgan arretiert worden sind. Das Betätigungsorgan kann sich innerhalb oder außerhalb des Maschinenträgers im Zugangsbereich befinden.

### Bezugszeichenliste

- 10: Rotornabe
- 12: Maschinenträger
- 14: Generator
- 16: Öffnung in Rotornabe
- 18: Anschlussbereich (Azimut)
- 22: Durchbrechung
- 24: Flanschbereich Generator
- 25: Anschlussbereich Rotorlager
- 28: Verbindungsflansch
- 30: Turm
- 32: Azimutdrehverbindung
- 34: Bodenblech
- 36: Einstiegsluke
- 38: Leiter
- 39: Abtrennung
- 40: Zugangsbereich
- 41: Durchbrechung
- 42: dargestellte Person
- 43: Tür
- 44: Weg
- 45: Tür
- 46: äußerer Arbeitsbereich
- 47: Tür
- 48: Rotorwelle
- 49: Kupplung
- 50: Durchbrechung
- 52: Wandung
- 54: innerer Arbeitsbereich
- 60: Durchbrechung
- 62: Durchbrechung
- 64: Durchbrechung

## Patentansprüche

1. Windenergieanlage mit einem Maschinenträger (12), der auf einem Turm gelagert und auf dem eine eine Rotornabe mit einem Generator verbindende Rotorwelle (48) gelagert ist, wobei der Maschinenträger (12) einen von dem Turm aus zugänglichen Zugangsbereich (40) besitzt, der von einem Arbeitsbereich (46, 54) des Maschinenträgers (12) durch eine Abtrennung (39) getrennt und mit dem Arbeitsbereich (46, 54) über eine verriegelbare Tür (43) verbunden ist, **dadurch gekennzeichnet, dass** der Maschinenträger (12) eine die Rotorwelle (48) umgebende Wandung (52) aufweist, die einen inneren Arbeitsbereich (54) umschließt, um diesen einzuhausen, wobei die Wandung (52) mindestens eine Durchbrechung (41, 50) aufweist und der Zugangsbereich (40) ein Betätigungsorgan für eine Arretiervorrichtung aufweist, die die Rotorwelle (48) in einer Position sichert, wobei die Arretiervorrichtung mit der verriegelbaren Tür (43) derart zusammenwirkt, dass diese bei erfolgter Arretierung der Rotorwelle (48) entriegelbar ist, wobei die verriegelbare Tür (43) des Zugangsbereichs (40) in der Durchbrechung (41) der einen inneren Arbeitsbereich (54) umschließenden Wandung (52) des Maschinenträgers (12) angeordnet ist.

2. Windenergieanlage nach Anspruch 1, **dadurch gekennzeichnet, dass** sich der Zugangsbereich (40) innerhalb und außerhalb des Maschinenträgers (12) erstreckt und die verriegelbare Tür (43) des Zugangsbereichs (40) in dem Bereich der Abtrennung (39) angeordnet ist, welcher sich außerhalb des Maschinenträgers (12) befindet.

3. Windenergieanlage nach Anspruch 1 oder 2, **dadurch gekennzeichnet, dass** der innere Arbeitsbereich (54) des Maschinenträgers (12) durch eine weitere Durchbrechung (50) in der Wandung (52) des Maschinenträgers (12) zugänglich ist.

4. Windenergieanlage nach Anspruch 3, **dadurch gekennzeichnet, dass** eine weitere Tür (45) in der weiteren Durchbrechung (50) der Wandung (52) des Maschinenträgers (12) angeordnet ist.

5. Windenergieanlage nach einem der Ansprüche 1 bis 4, **dadurch gekennzeichnet, dass** ein Paar von Durchbrechungen (41, 50) in der Wandung (52) vorgesehen ist, wobei die Durchbrechungen (41, 50) auf einander gegenüberliegenden Seiten des Maschinenträgers (12) angeordnet sind.

6. Windenergieanlage nach einem der Ansprüche 1 bis 5, **dadurch gekennzeichnet, dass** eine weitere Tür (47) in dem Bereich der Abtrennung (39) des Zugangsbereichs (40) vorgesehen ist, welcher sich innerhalb des Maschinenträgers (12) befindet.

7. Windenergieanlage nach Anspruch 6, **dadurch gekennzeichnet, dass** der innere Arbeitsbereich (54) des Maschinenträgers (12) durch die weitere Tür (47) zugänglich ist.

8. Windenergieanlage nach Anspruch 6 oder 7, **dadurch gekennzeichnet, dass** die weitere Tür als verriegelbare Tür ausgebildet ist und ebenfalls mit der Arretiervorrichtung derart zusammenwirkt, dass diese bei erfolgter Arretierung der Rotorwelle (48) entriegelbar ist.

9. Windenergieanlage nach einem der Ansprüche 1 bis 8, **dadurch gekennzeichnet, dass** die Wandung (52) des Maschinenträgers (12) weitere Durchbrechungen (60, 62, 64) aufweist.

10. Windenergieanlage nach Anspruch 9, **dadurch gekennzeichnet, dass** die weiteren Durchbrechungen (60, 62, 64) durch einen Berührschutz verschlossen sind.

11. Windenergieanlage nach Anspruch 9 oder 10, **dadurch gekennzeichnet, dass** die weiteren Durchbrechungen (60, 62, 64) in der Wandung (52) des Maschinenträgers (12) so angeordnet sind, dass durch die Durchbrechung eine Inspektion und/oder Wartung von Bauteilen im Inneren des Maschinenträgers (12) erfolgen kann.

12. Windenergieanlage nach einem der Ansprüche 1 bis 11, **dadurch gekennzeichnet, dass** die Wandung (52) des Maschinenträgers (12) zwischen zwei benachbarten Durchbrechungen (41, 50, 60, 62, 64) jeweils einen Steg (66) ausbildet, über welchen die Zug- und Druckkräfte ausgeleitet werden.

13. Windenergieanlage nach Anspruch 12, **dadurch gekennzeichnet, dass** der oder die Stege (66) in einem geneigten Winkel zur Längsrichtung der Rotorwelle (48) verlaufen.

14. Windenergieanlage nach einem der Ansprüche 1 bis 13, **dadurch gekennzeichnet, dass** der Maschinenträger (12) einen umlaufenden Anschlussbereich (25) an seinem zu der Rotornabe weisenden Ende aufweist, in dem ein rotornabenseitiges Lager der Rotorwelle (48) angeordnet ist.

15. Windenergieanlage nach einem der Ansprüche 1 bis 14, **dadurch gekennzeichnet, dass** der Maschinenträger (12) einen umlaufenden Anschlussbereich an seinem zum Generator weisenden Ende aufweist, an dem ein generatorseitiges Lager der Rotorwelle (48), ein Stator des Generators und/oder ein Lager des Generators angeordnet ist.

## Claims

1. A wind turbine with a machine frame (12), which is mounted on a tower and on which a rotor shaft (48) connecting a rotor hub to a generator is mounted, wherein the machine frame (12) has an access area (40) which is accessible from the tower and is separated from a working area (46, 54) of the machine frame (12) by a separation (39) and connected to the working area (46, 54) by a lockable door (43), **characterised in that** the machine frame (12) has a wall (52) surrounding the rotor shaft (48) which encloses an inner working area (54) in order to house it, wherein the wall (52) has at least one breakthrough (41, 50) and the access area (40) comprises an actuation element for a locking mechanism which secures the rotor shaft (48) in a position, the locking mechanism co-operating with the lockable door (43) such that the latter can be released after the rotor shaft (48) has been blocked, the lockable door (43) of the access area (40) being arranged in the breakthrough (41) of the wall (52) of the machine frame (12) which encloses the inner working area (54).

2. A wind turbine according to claim 1, **characterised in that** the access area (40) extends inside and outside of the machine frame (12) and the lockable door (43) of the access area (40) is arranged **in that** zone of the separation (39) which is located outside of the machine frame (12).

3. A wind turbine according to claim 1 or 2, **characterised in that** the inner working area (54) of the machine frame (12) can be accessed through an additional breakthrough (50) in the wall (52) of the machine frame (12).

4. A wind turbine according to claim 3, **characterised in that** an additional door (45) is arranged in the additional breakthrough (50) in the wall (52) of the of the machine frame (12).

5. A wind turbine according to any one of the claims 1 to 4, **characterised in that** a pair of breakthroughs (41, 50) is provided in the wall (52), wherein the breakthroughs (41, 50) are arranged at opposite sides of the machine frame (12).

6. A wind turbine according to any one of the claims 1 to 5, **characterised in that** an additional door (47) is provided in the zone of the separation (39) of the access area (40) which is located inside the machine frame (12).

7. A wind turbine according to claim 6, **characterised in that** the inner working area (54) of the machine frame (12) can be accessed through the additional door (47).

8. A wind turbine according to claim 6 or 7, **characterised in that** the additional door is realised as a lockable door and cooperates also with the locking mechanism such that it can be unlocked after the rotor shaft (48) has been blocked.

9. A wind turbine according to any one of the claims 1 to 8, **characterised in that** the wall (52) of the machine frame (12) has additional breakthroughs (60, 62, 64).

10. A wind turbine according to claim 9, **characterised in that** the additional breakthroughs (60, 62, 64) are closed by a contact protection.

11. A wind turbine according to claim 9 or 10, **characterised in that** additional breakthroughs (60, 62, 64) in the wall (52) of the machine frame (12) are arranged such that inspection and/or maintenance of component parts in the interior of the machine frame (12) can be performed through the breakthrough.

12. A wind turbine according to any one of the claims 1 to 11, **characterised in that** the wall (52) of the machine frame (12) has one bridge (66) at a time between two neighbouring breakthroughs (41, 50, 60, 62, 64) through which the tension and compression forces are diverted.

13. A wind turbine according to claim 12, **characterised in that** the bridge(s) (66) extend(s) in an inclined angle to the longitudinal direction of the rotor shaft (48).

14. A wind turbine according to any one of the claims 1 to 13, **characterised in that** the machine frame (12) has a circumferential connection zone (25) at its end pointing towards the rotor hub, in which a rotor hub side bearing of the rotor (48) shaft is arranged.

15. A wind turbine according to any one of the claims 1 to 14, **characterised in that** the machine frame (12) has a circumferential connection zone at its end pointing towards the generator, in which a generator side bearing of the rotor shaft (48), a stator of the generator and/or a bearing of the generator is arranged.

## Revendications

1. Eolienne avec un châssis de machine (12), qui est monté sur une tour et sur lequel est monté un arbre de rotor (48) reliant un moyeu du rotor à un générateur, le châssis de machine (12) ayant une zone d'accès (40) accessible à partir de la tour et séparée d'une zone de travail (46, 54) du châssis de machine (12) par une séparation (39) et raccordée à la zone de travail (46, 54) par une porte à verrouillage (43), **caractérisée en ce que** le châssis de machine (12) a une paroi (52) entourant l'arbre de rotor (48) et qui enclave une zone de travail intérieure (54) afin de la loger, la paroi (52) ayant au moins une ouverture (41, 50) et la zone d'accès (40) comportant un actionneur pour un mécanisme de verrouillage qui sécurise l'arbre de rotor (48) dans une position, le mécanisme de verrouillage coopérant avec la porte à verrouillage (43) de telle manière que celle-là peut être déverrouillée après que l'arbre de rotor (48) a été verrouillé, la porte à verrouillage (43) de la zone d'accès (40) étant arrangée dans l'ouverture (41) de la paroi (52) du châssis de machine (12) qui enclave la zone de travail (54).

2. Eolienne selon la revendication 1, **caractérisée en ce que** la zone d'accès (40) s'étend dans l'intérieur et au dehors du châssis de machine (12) et que la porte à verrouillage (43) de la zone d'accès (40) est arrangée dans la zone de la séparation (39) qui se trouve en dehors du châssis de machine (12).

3. Eolienne selon la revendication 1 ou 2, **caractérisée en ce que** la zone de travail intérieure (54) du châssis de machine (12) est accessible à travers une autre ouverture (50) dans la paroi (52) du châssis de machine (12).

4. Eolienne selon la revendication 3, **caractérisée en ce qu'**une autre porte (45) est arrangée dans l'autre ouverture (50) de la paroi (52) du châssis de machine (12).

5. Eolienne selon l'une quelconque des revendications 1 to 4, **caractérisée en ce qu'**une paire d'ouvertures (41, 50) est prévue dans la paroi (52), les ouvertures (41, 50) étant arrangées dans des cotés opposés du châssis de machine (12).

6. Eolienne selon l'une quelconque des revendications 1 to 5, **caractérisée en ce qu'**une autre porte (47) est prévue dans la zone de la séparation (39) de la zone d'accès (40) qui se trouve dans l'intérieur du châssis de machine (12).

7. Eolienne selon la revendication 6, **caractérisée en ce que** la zone de travail intérieure (54) du châssis de machine (12) est accessible à travers l'autre porte (47).

8. Eolienne selon la revendication 6 ou 7, **caractérisée en ce que** l'autre porte est réalisée comme une porte à verrouillage et coopère aussi avec le mécanisme de verrouillage, de sorte qu'elle peut être déverrouillée après que l'arbre de rotor (48) a été verrouillé.

9. Eolienne selon l'une quelconque des revendications 1 to 8, **caractérisée en ce que** la paroi (52) du châssis de machine (12) a des autres ouvertures (60, 62, 64).

10. Eolienne selon la revendication 9, **caractérisée en ce que** les autres ouvertures (60, 62, 64) sont fermées par une protection de contact.

11. Eolienne selon la revendication 9 ou 10, **caractérisée en ce que** les autres ouvertures (60, 62, 64) dans la paroi (52) du châssis de machine (12) sont arrangées tellement qu'une inspection et/ou une maintenance de composants dans l'intérieur du châssis de machine (12) peuvent être faites à travers l'ouverture.

12. Eolienne selon l'une quelconque des revendications 1 to 11, **caractérisée en ce que** la paroi (52) du châssis de machine (12) forme chaque fois une barre (66) entre deux ouvertures (41, 50, 60, 62, 64) avoisinantes, à travers laquelle les forces de tension et compression sont détournées.

13. Eolienne selon la revendication 12, **caractérisée en ce que** la barre/les barres (66) s'étend(ent) avec un angle incliné par rapport à la direction longitudinale de l'arbre de rotor (48).

14. Eolienne selon l'une quelconque des revendications 1 to 13, **caractérisée en ce que** le châssis de machine (12) a une zone de raccordement (25) circonférentielle dans son extrémité qui montre vers le moyeu du rotor, dans laquelle est arrangé un palier coté moyeu du rotor de l'arbre de rotor (48).

15. Eolienne selon l'une quelconque des revendications 1 to 14, **caractérisée en ce que** le châssis de machine (12) a une zone de raccordement circonférentielle dans son extrémité qui montre vers le générateur, dans laquelle sont arrangés un palier coté générateur de l'arbre de rotor (48), un stator du générateur et/ou un palier du générateur.
